# EUROPEAN PATENT SPECIFICATION

(11) **EP 2 553 548 B1**
(45) Date of publication and mention of the grant of the patent: **21.05.2014**
(21) Application number: 11711376.1
(22) Date of filing: 31.03.2011
(51) Int. Cl.: G06F 3/02, G06F 3/023, H01H 13/83

(54) **A DYNAMIC DISPLAY KEYBOARD AND A KEY FOR USE IN A DYNAMIC DISPLAY KEYBOARD**
DYNAMISCHE ANZEIGETASTATUR UND TASTE ZUR VERWENDUNG BEI EINER DYNAMISCHEN ANZEIGETASTATUR
CLAVIER À AFFICHAGE DYNAMIQUE ET TOUCHE DESTINÉE À ÊTRE UTILISÉE DANS UN CLAVIER À AFFICHAGE DYNAMIQUE

(30) Priority: 31.03.2010 US 341445 P; 31.03.2010 EP 10158765
(43) Date of publication of application: 06.02.2013
(73) Proprietor: Danmarks Tekniske Universitet, 2800 Kgs. Lyngby (DK)
(72) Inventor: PEDERSEN, Finn, DK-4000 Roskilde (DK); GLÜCKSTAD, Jesper, DK-2000 Frederiksberg (DK)
(74) Representative: Zacco Denmark A/S
(86) International application number: PCT/EP2011/055067
(87) International publication number: WO 2011/121102

(56) References cited:
- WO-A2-2005/057320
- US-A1- 2004 125 078
- US-A1- 2006 132 449
- US-A1- 2008 131 184
- US-A1- 2009 153 491
- US-A1- 2010 040 400

## Description

The invention relates to a dynamic display keyboard. The invention further relates to a corresponding key for a dynamic display keyboard.

There is today a large demand on dynamic display keyboards in which the symbols of the keyboard may be dynamically changed such as for example one day to provide a set of Cyrillic characters and the next day a set of Chinese characters.

A problem of the existing dynamic display keyboards is, among other things, their lack of resemblance with traditional keyboards with respect to e.g. size, weight and tactile behaviour of the keys.

It is an object of the present invention to, among other things, solve the abovementioned problem. The abovementioned problem is solved by a dynamic display keyboard comprising a plurality of key elements, wherein each key element comprises a transmitting part configured for transmitting at least a part of light incident on the transmitting part. The dynamic display keyboard further comprises an elevated element for each key element, wherein each elevated element is configured for providing tactile feedback. The dynamic display keyboard further comprises at least one spacer for each key element for fixedly connecting each key element to at least one respective elevated element. The dynamic display keyboard further comprises a display unit that comprises a frame part and a moveable part for each key element. Each movable part is movable in relation to the frame part. An outer part of each moveable part is situated between a respective key element and the corresponding elevated element. The display unit is further configured such that light from a respective outer part, which light propagates through a respective transmitting part, defines a visual value of the corresponding key element.

The display unit further comprises a thin flexible layer display comprising the frame part and each movable part, wherein the thickness of the display unit is less than 2 mm.

Thereby is achieved that the keyboard is dynamic and further is able to provide a tactile feedback in response to a user action directed towards a key of the keyboard. Further, the only power requiring element in the keyboard is the display unit. Further is provided a dynamic display keyboard that may be integrated into existing keyboard technology e.g. scissor-element keyboards.

Other embodiments and advantages are provided below in the detailed description, in the claims and in the drawings.

### Brief description of the drawings

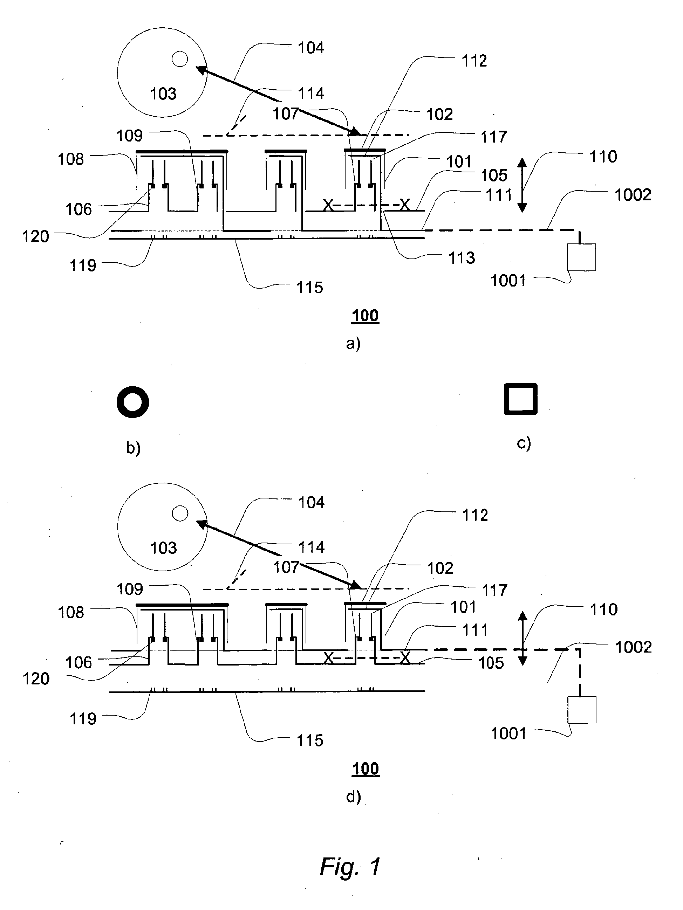

Figure 1a illustrates an embodiment of a dynamic display keyboard.
Figure 1b illustrates an embodiment of a circular cross-sectional form along the X-X axis of a dome element.
Figure 1c illustrates an embodiment of a square cross-sectional form along the X-X axis of a dome element.
Figure 1 d) illustrates the display unit placed above the mat.
Figure 2 illustrates an embodiment of a dynamic display keyboard comprising conducting fixators.
Figure 3 illustrates an embodiment in which a key element of the dynamic display keyboard comprising electrically conducting fixators is in a depressed state.
Figure 4 illustrates an embodiment of the dynamic display keyboard further comprising a layer in which the key elements are included.
Figure 5 illustrates an embodiment in which a key element of the dynamic display keyboard is in a depressed state.
Figure 6 illustrates an embodiment of a key in a dynamic keyboard comprising a scissor-element.
Figure 7 illustrates an embodiment of a device comprising a dynamic display keyboard comprising a detachable part and a light generating layer.
Figure 8 illustrates an embodiment 900 of the display unit 111 comprising a thin layer display unit 911.
Figure 9 a) illustrates an embodiment of a key 1200 of a dynamic display keyboard.

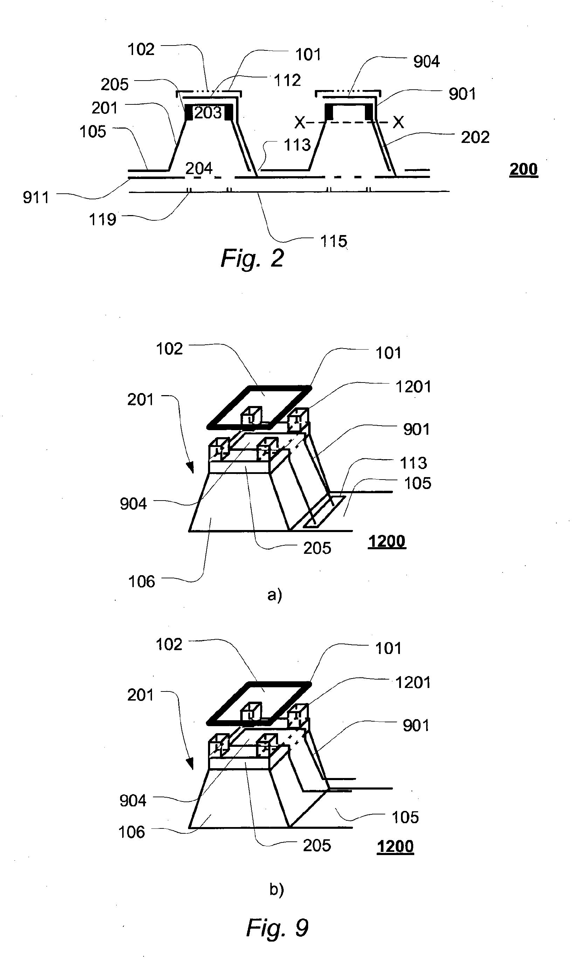

Figure 9 b) illustrates an embodiment of figure 9 a) in which the display unit 111 is placed above the mat 105.

### Detailed description of the invention

Figure 1 a) illustrates an embodiment of a dynamic display keyboard 100. The dynamic display keyboard comprises a plurality of key elements 101 e.g. a plurality of alpha-numeric keys. Each of the key elements 101 comprises a transmitting part 102 capable of transmitting at least a part of light incident on the transmitting part 102.

In an embodiment, the transmitting part 102 may be made of and/or may comprise a transparent polymer or silica glass or the like i.e. a material having a high transmittance of the incident light. In an additional embodiment, the transmitting part 102 may be made of and/or may comprise a material having a high transmittance of incident light visible to a human being i.e. in the wavelength range from approximately 380 nm (violet light) to approximately 750 nm (red light).

The transmitting parts 102 may be positioned at the top of the key elements 101 as indicated in figure 1 a). Thereby, light incident on the transmitting part 102 from a light generating device, such as a group of pixels 112 in a light generating device 111 (such as a flat-panel display e.g. OLED or LCD), may reach a user 103 e.g. via light path 104. The transmitting parts 102 may be connected to the key element 101 via glue, vulcanization, or the like.

The dynamic display keyboard 100 may further comprise a mat 105 made of and/or comprising an elastic and flexible material such as rubber. The mat 105 may comprise a plurality of elevated elements such as dome elements 106, 107, 109 capable of providing a tactile feedback. The dome elements 106, 107, 109 may be made in the same material as the mat 105. The mat 105 comprising the dome elements 106, 107, 109 may in one embodiment be cast in one piece. The dome elements 106, 107, 109 may be open in one end 118 facing the mat 105 and closed in the other end 117 facing the transmitting part 102. Further, the dome elements 106, 107, 109 may be hollow.

Each key element 101 is fixedly connected to at least one dome element 106 as disclosed below. As seen in figure 1 a), key element 101 is fixedly connected to one dome element 107, and key element 108 is fixedly connected to two dome element 106 and 109. The number of dome elements 106, 107, 109 fixedly connected to a key element 101, 108 may depend on the size of the key element such that a large key (e.g. a space key) may be connected to a plurality of dome elements and a small key (e.g. a character key) may be connected to a single dome element.

In a computer keyboard, for example, a SHIFT key may be fixedly connected to two dome elements, an alpha-numeric key may be fixedly connected to one dome element, and the spacebar may be fixedly connected to four dome elements.

The term fixedly connected is to be understood as the key element may be resting on the dome element and/or it may be glued or vulcanized to the dome element and/or welded to the dome element and/or cast with the dome element.

In an embodiment, the dome elements 106, 107, 109 provide control of the dimensions in which the key elements 101, 108 may move. The dome elements 106, 107, 109 may in an embodiment restrict the direction in which the key elements 101, 108 may move. In an embodiment, the direction to which the key elements may move may be the direction 110 perpendicular to the rubber mat 105 or substantially perpendicular to the rubber mat 105 e.g. 90 degrees +/- 5 degrees.

In order to have the dome element deform, an external force provided by a user pressing the associated key element, is required. The dome elements may be made of and/or may comprise a soft plastic or rubber or any other material capable of deforming along the direction of movement 110 when an external force having a component in the direction of movement 110 is applied to the key element 101. In an embodiment, the dome element 106 may be such as to require a threshold force in the direction of movement 110 before deforming thereby providing a tactile response to a user applying a force to the key element 101 and making the dome element able to sustain the weight of the key element 101 without any substantial deformation in the direction of movement 110 of the key element when an external force is not applied.

Thereby, the dome element 106, 107, 109 is able to provide a tactile feedback in response to a user action e.g. a user pressing the key element.

The key element 101 may be made of and/or may comprise a material harder than the dome element. For example, the key element 101 may be made of and/or may comprise melamine resin.

Figure 1 b) illustrates a circular cross-sectional view along the X-X axis of a dome element 106, 107, 109.

Figure 1 c) illustrates a square cross-sectional view along the X-X axis of a dome element 106, 107, 109.

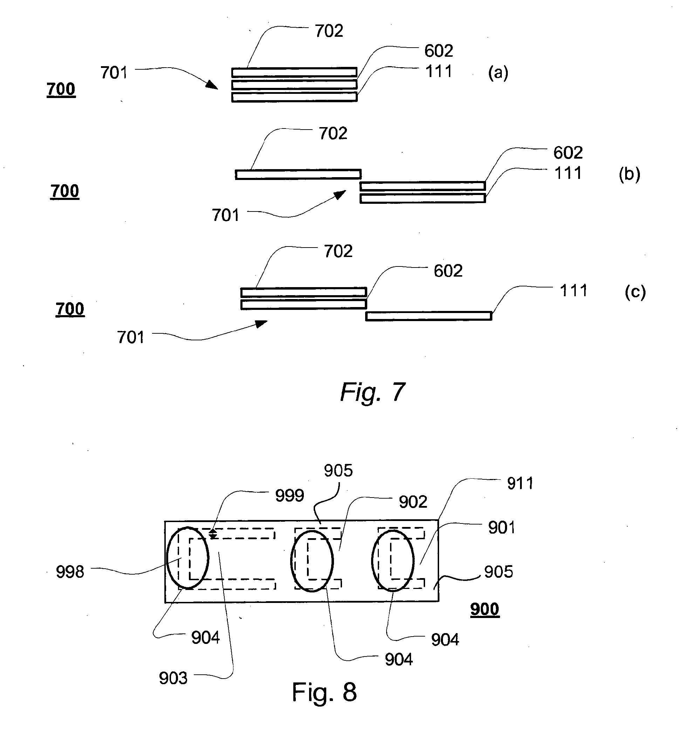

The dynamic display keyboard 100 may further comprise at least one display unit 111. The display unit 111 is configured to provide light to the plurality of transmitting parts 102. The display unit 111 may comprise an LCD or OLED in which a pixel or a group of pixels 112 of the display are assigned to a key element 101. As seen in figure 1 a), a group of pixels 112 are stamped out (i.e. e.g. the group of pixels 112 are grouped by punching out another part from the display unit 111) from the display unit 111 (see Fig. 8 for an explanation in more detail in relation to stamped out parts and/or pixels of a display unit 911) and the group of pixels 112 are positioned between the key element 101 comprising the transmitting part 102 and the dome element 106, 107, 109. Therefore, light emitted by the group of pixels 112 may pass the transmitting part 102. The group of pixels 112 may comprise one or more pixels in one or two directions i.e. a linear or planar arrangement of pixels may be comprised in the group of pixels 112.

As seen in figure 1 a), the elastic and flexible mat is positioned between the display unit 111 and the plurality of key elements 101, 108.

In an embodiment, the dynamic display keyboard 100 may additionally comprise a printed circuit board (PCB) 115 comprising a plurality of pads 119 for determining whether a key element 101, 108 has been pressed. The pads may in an embodiment be made of and/or comprise carbon e.g. an electrically conducting carbon.

The PCB may be positioned below the display unit 111.

Each pad 119 comprises a first and a second pad part, and the first pad part is electrically isolated from the second pad part. When a key element 101 is depressed, a conductive element 120 passes through an opening left in the light generating layer 111 by the group of pixels 112 stamped out in the display unit 111 and is brought into contact with the first and second pad parts thereby short circuiting the first and second pad parts of at least one pad 119, thereby enabling detection of the depressed key element 101.

Further, passages or openings 113, such as holes, are included in the mat 105. The passages 113 are placed such as to enable parts of the display unit 111 to be passed through the mat 105.

In an embodiment, a processing unit 1001 may be communicatively coupled to the light generating layer 111 via a wireless and/or wired communication link 1002 such as Bluetooth or cable. The processing unit 1001 may determine which characters are to be displayed on which key elements 101 by providing a control signal to the respective group of pixels 112 under the key elements 102. In an embodiment, the processing device 1001 further comprises a power providing unit such as a connection to a power grid and/or a battery.

In an embodiment, any of the below-mentioned embodiments of figures 2 and 4 and 5 and 7 and 8 may be communicatively coupled to a processing device 1001 as disclosed above.

In an embodiment, the PCB circuit is communicatively coupled to the processing unit 1001 via a wireless and/or wired communication link such as Bluetooth or cable. The value of a detected depressed key element 101 may be transmitted from the PCB circuit to the processing unit 1001 for further processing.

In an embodiment as illustrated in figure 1 d), the display unit 111 may be placed above the mat 105 i.e. e.g. such that the mat 105 is between the display unit 111 and the PCB 115. In this embodiment, the mat 105 may be cast in one piece i.e. without the holes 113 of figure 1.

Figure 8 illustrates an embodiment 900 of the display unit 111, wherein the display unit 111 comprises a thin flexible layer display unit 911 such as an OLED or the like.

In an embodiment, the thickness of the thin layer display unit 911 is in the range 0.05 mm to 0.5 mm such as 0.1 mm to 0.2 mm.

In embodiments, the thickness of the thin layer display unit 911 is less than 2 mm, such as less than 1 mm, such as less than 0.5 mm, such as less than 0.2 mm.

The thin layer display unit 911 comprises a stamped out part (movable part) 901, 902, 903 (defining respective light generating layers) for each of the plurality of key elements 101, 108, which represents the plane of the thin layer display unit perpendicular to the direction 110 e.g. the plane of the keys in a computer keyboard. Each of the stamped out parts 901, 902, 903 constitutes individual display units contained in the thin layer display unit 911.

As is clearly illustrated in Figure 8, the display unit 911 is punched such that stamped out parts (or movable parts) of the display unit 911 are provided. The stamped out parts are connected to the remainder of the display unit. Thus, after the stamping out (or punching) of the display unit, the display unit 911 comprises a moveable part (stamped out part) for each key element and comprises a frame part 905.

Each movable part may be movable in relation to the frame part. Thus, a movable part may be moved during a movement of a respective key element.

As an alternative to stamping (or punching) out parts of the display unit, the display unit may be produced such that the plurality of movable parts and the frame are provided without punching (or stamping out) parts of the display unit, but by producing the display unit as a whole, e.g. by means of moulding the display unit.

As an alternative to the stamped (or punched) out parts, a cut or a break in the display unit may be provided along a line where material otherwise would have been removed. Thus, in embodiments, no parts of the display unit are removed during the generation of the movable parts.

An outer part 904 of the stamped out part (movable part) 901 is positioned between the transmitting part 102 and the dome element 106, 107, 109 of each of the key elements 101 as illustrated in figure 1. This may be achieved by lifting up the stamped out part 901 from the plane of the thin layer display unit 911, guiding it through the respective holes 116, 113 in the PCB 115 and the mat 105, respectively, and placing the outer part 904 of the stamped out part 901 under the transmitting part 102. Subsequently, the dome element 107 may be inserted into the key element 101 in order to provide tactile feedback to the key element 101. The outer part 904 is moveably connected to the key element 101. Thereby, the outer part 904 of each stamped out part 901, 902, 903 may move together with the key element 101 to which the outer part 904 is moveably connected for example when the key element is depressed. Thus, the stamped out part may be a movable part.

In an embodiment, each pixel of the outer part 304 of each of the stamped out parts is addressed via a data-bus integrated in the thin layer display unit.

In an embodiment of figure 8, the stamped out part of each respective light generating layer comprises a first width 999 along a first side of the stamped out part and a second thickness 998 along a second side of the stamped out part. The thicknesses 999 and 998 may be more than approximately 1 mm e.g. more than 1.0mm +/- 0.1 mm. In an embodiment, the thicknesses 999 and 998 are 3.0mm +/-0.5mm.

The width 999 may enable flexibility in the group of pixels 112 of the thin flexible display unit 911 when the associated key element 101 is moving during a depression from an equilibrium state or a return to the equilibrium state (un-pressed key element).

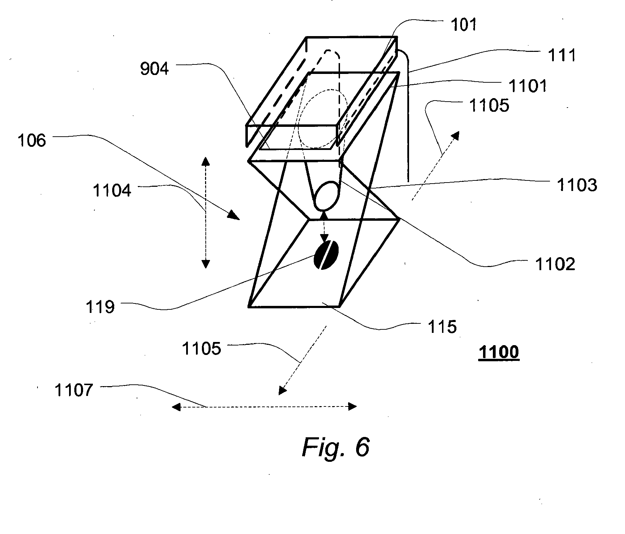

Figure 6 illustrates an embodiment of a key 1100 in a dynamic display keyboard comprising a scissor-switch.

The key 1100 comprises a scissor element 106. The scissor element 106 may comprise a closed top 1101 under which a rod 1102 may be attached by glue, vulcanization, welding or the like. The rod 1102 may be made of and/or may comprise a conductive material such as iron doped rubber or the like. The scissor element 106 may further comprise two X-formed structures which may be collapsible around a pivotal point 1103 like an opening scissor.

Further, the scissor element 106 may be fixedly connected to a key element 101 via spacers (not illustrated) placed at the corners of the top 1101. The spacers may be fixed to the key element 101 and to the top 1101 by glue, vulcanization, welding or the like. Thereby, the spacers create a gap between the top 1101 and the key element 101 in which gap, an outer part 904 of a stamped out part 901, 902, 903, may be placed. The outer part 904 is thus movable connected (not fixed) to the key element 101 or to the top 1101, but may glide on the surface of the top 1101 when the key element 101 is depressed. The outer part 904 is kept in place between the top 1101 and the key element 101 by its connection to the thin flexible layer display unit 911. Further, the spacers may additionally act as rails by which the outer part 904 may be kept in place in the lateral direction 1107.

When a force 1104 is applied to the key element 101 fixedly connected to the top 1101 via the spacers, the bottom part of the X-structures slides on a rail or track along the direction 1105 thereby reducing the height of the scissor element 106. At a point, the rod 1102 will come into physical contact with a pad arrangement 119 of the PCB 115, whereby electrical contact is made between the two pad parts and the key element 101 pertaining to the scissor element 106 may be detected as having been depressed.

The PCB 115 may be arranged in a mat-like structure as illustrated in figure 1 a) comprising at least one PCB for each key element 101. In an embodiment, the thin flexible layer display unit 911 is placed between the key elements and the PCB 115. Thereby, the PCB may be cast in one piece without openings for the display unit 111 (e.g. as seen in figure 1 a). In an alternative embodiment, the display unit 111 may be placed below the PCB. Thus, the PCB 115 may comprise openings enabling the stamped out part to pass through in order for the outer part 904 to be placed in the gap.

The embodiment 1100 may be used in a low profile type keyboard such as known from laptops and the like. A low profile type keyboard may be a keyboard where the individual keys comprise a part (key element) to be moved by a finger, which part is configured to travel less than e.g. 3 mm, such as less than 2 mm, during a keystroke by a user.

Figure 2 illustrates an embodiment 200 of a dynamic display keyboard comprising a dome element. As in the above-mentioned embodiment 100, the dynamic display keyboard 200 comprises a key element 101 comprising a transparent part 102. The transparent part 102 may be connected to the key element 201 by gluing, vulcanization, welding or the like.

Further, as described above, the dynamic display keyboard 200 further comprises a mat 105 made of and/or comprising an elastic and flexible material such as rubber. The rubber mat 105 may comprise a plurality of elevated elements such as dome elements 201, 202 capable of providing a tactile feedback as described above.

The dome elements 201, 202 of figure 2 may comprise a cross-sectional form being trapezium shaped in the plane illustrated in figure 2. Further, the cross sectional form of the dome elements 201, 202 may be square-shaped along the X-X plane. As described above, the rubber mat 105 is open in one end 204 and closed in the other end 203.

In an embodiment, the dynamic display keyboard 200 may comprise a thin flexible layer display unit 911.

A group of pixels 112 (i.e. e.g. contained in a movable part of the display unit) are positioned between the key element 101 comprising the transmitting part 102 and the closed dome element 205. Light emitted by the group of pixels 112 may pass the transmitting part 102. The group of pixels 112 may comprise one or more pixels in one or two directions i.e. a linear or planar arrangement of pixels may be comprised in the group of pixels 112.

The part of the display unit 904 comprising the group of pixels 112 may be placed against the key element 101 or against the top of the closed dome element 205 or it may be in no physical contact with the top of the closed dome element 205 or the key element 101 i.e. hovering in between the key element 101 and the dome element 205 by being supported by the rest of the stamped out part 901.

Further, passages 113, such as holes, are included in the mat 105. The passages 113 are placed such as to enable parts of the thin flexible layer display unit 911 to be passed through the mat 105.

In this embodiment, the rubber mat 105 further comprises fixators 205 to which the key elements 101 may be fixated e.g. by gluing, vulcanization, welding or the like. The horizontal distance between two opposing inner sides of the fixators 205 may correspond to the size of the transparent part 102 in the respective dimensions of the plane containing the transparent part 102. The fixators 205 may be made of and/or may comprise a hard plastic or rubber material such as to provide a stable platform on which the key element 101 may be placed.

In an embodiment, the fixators 205 are able to conduct an electric current. For example, the hard plastic or rubber may be doped with a metallic powder such as iron or the like. Alternatively or additionally, the fixators 205 may contain an electric wire providing an electrically closed loop.

In an embodiment, the fixators 205 are cast during production of the mat 105.

In an embodiment, the dynamic display keyboard 100 may additionally comprise a printed circuit board (PCB) 115 comprising a plurality of pads 119 for determining whether a key element 101, 108 has been pressed.

The PCB may be positioned below the display unit 111 and below the elastic and flexible mat 105.

Each pad 119 comprises a first and a second pad part, and the first pad part is electrically isolated from the second pad part. When a key element 101 is depressed, a conductive element 120 passes through an opening left in the light generating layer 111 by the group of pixels 112 stamped out in the display unit 111 and is brought into contact with the first and second pad parts thereby short circuiting the first and second pad parts of at least one pad 119, thereby enabling detection of the depressed key element 101.

Further, passages or openings 113, such as holes, are included in the mat 105. The passages 113 are placed such as to enable parts of the display unit 111 to be passed through the mat 105.

In an embodiment, the display unit 111 may be placed above the mat 105. Thus, the mat 105 may be cast without the openings 113.

Figure 9 a) illustrates an embodiment of a key 1200 of a dynamic display keyboard. The key comprises a dome element 201 and pertaining key element 101 comprising a transparent part 102. The dome element 201 is cast e.g. in one piece and the fixator 205 may be cast in the same production step. The fixator 205 is solid in order to enable an outer part 904 of a stamped out part 901 of a display unit (not illustrated) to be placed on the fixator 205. The display unit (not illustrated) may be placed below the mat 105. A number of spacers 1201 (in this embodiment four spacers 1201 placed at each corner of the fixator 205; alternatively two spacers each running along the part 904 of the display positioned between the key element and the fixator 205) are fixedly connected to the fixator 205 by glue, vulcanization, welding or the like. On top of the spacers, the key element 101 is fixedly connected using glue, vulcanization or the like. Thereby, a volume exists between the key element 101 and the fixator 205 in which volume the outer part 904 of the stamped out part 901 of the display unit (not illustrated) may be positioned. An opening 113, such as a hole or the like, is contained between the dome element such that the stamped out part 901 may be guided through the opening 113 such that the outer part 904 of the stamped out part 901 may be placed in the volume (either against the fixator 205 or the key element 101 or floating in the air due to the connection to the stamped out part 901). Thereby, the outer part providing the alpha-numeric value of the key element 101 is able to move freely in the plane of the fixator 205 when the key element 101 is depressed.

Figure 9 b) illustrates an embodiment of figure 9 a) in which the display unit 111 is placed above the mat 105. In this embodiment, the mat 105 may be cast in one piece i.e. without the holes 113 of figure 9 a).

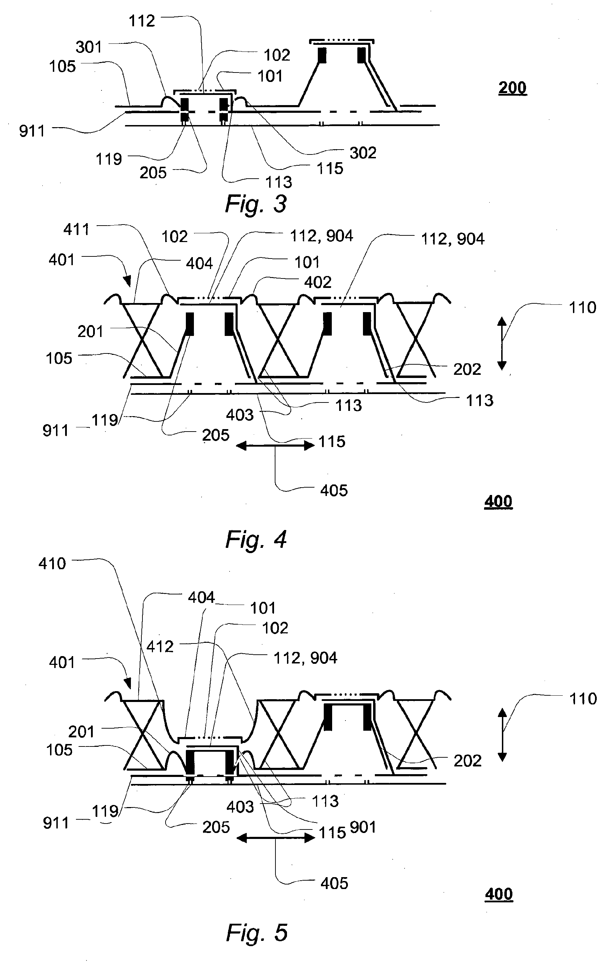

Figure 3 illustrates an embodiment in which a key element 101 of the dynamic display keyboard 200 comprising electrically conducting fixators is in a depressed state. In this embodiment, the thin flexible layer display unit 911 may be a touch sensitive display with capacitive detection. Thereby, when a key element 101 is depressed, a conductive element 205 passes through an opening left in the light generating layer 111 by the group of pixels 112 stamped out in the display unit 111 and is brought into contact with the first and second pad parts of the PCB 115 thereby short circuiting the first and second pad parts of at least one pad 119, thereby enabling detection of the depressed key element 101 by the PCB 115. The detected depressed key value may be transmitted to the processing unit 1001 for further processing.

Figure 4 illustrates an embodiment 400 of the dynamic display keyboard 200 further comprising a layer 401 in which the key elements 101 are included.

The layer 401 may comprise a collar/ridge 402. The collar/ridge 402 may be made of and/or may comprise an elastic and flexible material such as rubber. Additionally, the layer 401 may comprise a rigid part 404 made of and/or comprising a hard and non-flexible plastic.

Between the rigid part 404 and the mat 105 (in the direction 110), supporting elements 403 may be positioned i.e. between the dome elements 201 of the mat 105 (in the direction 405). The supporting elements 403 support the layer 401. The supporting elements 403 may be glued or vulcanized or welded to the rigid part 404 and the mat 105.

The key elements 101 comprise a transparent part 102 i.e. a transparent window. The key elements 101 may be glued or vulcanized or welded to the collar/ridge 402.

In an embodiment, the collar/ridge 402 is made of and/or comprises a transparent elastic and flexible material.

The dynamic display keyboard further comprises a group of pixels 112 associated with an outer part 904 of a stamped out part 901 of the display unit 901. The stamped part 901 is guided through a hole 113 in the mat 105 such that the outer part 904 may be positioned between the key element and the fixators 205.

In an embodiment, the dynamic display keyboard 400 comprises a PCB circuit 115 below the thin flexible layer display unit 911.

In an embodiment, the height from the top of a respective outer part 904 to the frame part of the thin flexible layer display unit 911 plane is in the range from about 2.0 mm to about 3.0 mm, i.e. e.g. from 2.0 mm +/- 0.3mm to 3.0mm +/- 0.3mm.

Figure 5 illustrates an embodiment in which a key element 101 of the dynamic display keyboard 400 is in a depressed state. In the depressed state, the dome element 201 of the depressed key element 101 and the collar/ridge 402 of the depressed key 101 are flexing to provide the tactile feedback of the key element 101.

In an embodiment, when a key element 101 is depressed, the electrically conductive fixator 205 passes through an opening 113 left in the light generating layer 111 by the group of pixels 112 stamped out in the display unit 111 and is brought into contact with the first and second pad parts of the PCB 115 thereby short circuiting the first and second pad parts of at least one pad 119, thereby enabling detection of the depressed key element 101 by the PCB 115. The detected depressed key value may be transmitted to the processing unit 1001 for further processing. 301 and 302 denote depressed/flexed dome elements 201, 202 and 410 and 412 denote depressed/flexed collar/ridge elements 402 and 411.

This embodiment, among other things, provides a keyboard with a layer 401 that is easily cleaned and which prevents dust and other things or fluids from falling in between the dome elements 201.

Figure 7 illustrates an embodiment 700 of a device comprising a dynamic display keyboard 701 according to any of embodiments 1, 2, and 4, i.e. comprising a detachable part 602 and a thin flexible layer display unit 111. Additionally, the device further comprises a second light generating layer 702 such as a LCD flatpanel or the like.

The device 700 may comprise a sliding mechanism such that the device may be in a closed state as indicated in figure 7(a), a state 7(b) in which the dynamic display keyboard 701 comprising the detachable part 602 and the thin flexible layer display unit 911 are slid out such that the dynamic display keyboard may be used, and a state 7 (c) in which only the second light generating layer 702 is slid out in order to provide a larger total light generating device area.

In an embodiment, the detachable part 602 and the thin flexible layer display unit 911 may be hinged together in order to enable the sliding according to figure 7(b). Figure 7(c) may be achieved by opening the hinges hinging the detachable part 602 and the thin flexible layer display unit 911 together.

In one aspect, the above-described dynamic display keyboard may be used to e.g. provide different values to a key in a keyboard. One day, the keyboard may provide Latin alphabet key values and the next day Cyrillic alphabet key values. Alternatively or additionally, the dynamic display keyboard may ease use of special keys such as Alt Gr, CTRL, etc. When pressing one of these special keys, the dynamic display keyboard may only illuminate the keys and key values that can be reached in combination with the special key pressed down.

In an embodiment, the keyboard may be included in a computer system via a wired and/or wireless communication link such as an electric cable and/or a Bluetooth link. In this embodiment, the keyboard may comprise a short-range radio receiver and transmitter (e.g. a Bluetooth transmitter and receiver) and the computer system may comprise a similar short-range radio receiver and transmitter. Additionally or alternatively, the keyboard and the computer system may comprise a socket for an electric wire via which the computer system and the keyboard may be connected via an electric wire.

Although some embodiments have been described and illustrated in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

Throughout the description, terms such as "above" and "below" should be understood in a context where the keyboard is situated on a horizontal surface with the key elements facing upwards for operation by a user of the keyboard.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A dynamic display keyboard (100) comprising
■ a plurality of key elements (101), each key element comprising a transmitting part (102) configured for transmitting at least a part of light incident on the transmitting part;
■ an elevated element (106, 107, 109, 201, 202) for each key element, each elevated element being configured for providing tactile feedback;
■ at least one spacer (1201) for each key element for fixedly connecting each key element to at least one respective elevated element;
■ a display unit (111, 911) comprising a frame part (905) and comprising a moveable part (901, 902, 903) for each key element, each movable part being movable in relation to the frame part, wherein an outer part (904) of each moveable part is situated between a respective key element and the corresponding elevated element; the display unit being configured such that light from a respective outer part, which light propagates through a respective transmitting part, defines a visual value of the corresponding key element, wherein the display unit comprises a thin flexible layer display (911) comprising the frame part and each movable part, and wherein the thickness of the display unit is less than 2 mm.

2. A dynamic display keyboard according to claim 1, wherein the thickness of the thin layer display unit is in the range of 0.1 mm to 0.2 mm.

3. A dynamic display keyboard according to claim 1 or 2, comprising a data-bus integrated in the thin layer display unit, wherein the data-bus addresses the outer part of each of the movable parts.

4. A dynamic display keyboard according to any of the preceding claims, comprising an elastic mat (105) containing the elevated elements, wherein the respective elevated elements each are configured to control the direction of movement of the respective key element.

5. A dynamic display keyboard according to any of the claims 1 - 3, comprising an elastic mat (105) containing the elevated elements, wherein each of the elevated elements are fixedly connected to a respective scissor element (106) and wherein each of the scissor elements are configured to control the direction of movement of the respective key element.

6. A dynamic display keyboard according to any of the preceding claims, wherein a part of the elevated element to which the key element is fixedly connected is solid and electrically conducting.

7. A dynamic display keyboard according to any of the preceding claims, comprising a layer (401) comprising a collar (402) for each key element, wherein each key element is fixedly connected to a respective collar.

8. A dynamic display keyboard according to claim 7 as dependent on claim 4 or 5, wherein the dynamic display keyboard further comprises at least one supporting element (403) positioned between the layer comprising a collar for each key element and the mat and supporting the layer comprising a collar for each key element.

9. A dynamic display keyboard according to any of the preceding claims, wherein the height from the top of the frame of the display unit to the top of a respective outer part of the moveable part is selected in the range from 2.0 mm to 3.0 mm.

10. A dynamic display keyboard according to any of the preceding claims, wherein the transmitting part is transparent.

11. A dynamic display keyboard according to any of the preceding claims, comprising a printed circuit board (115) configured to detect a depressed key element.

12. A dynamic display keyboard according to any of the preceding claims as dependent on claim 4 or 5, wherein the display unit is placed below the elastic mat and wherein the elastic mat comprises an opening (113) for each key element, such that a respective movable part of the display unit pertaining to a respective key element is configured to be guided through the opening and positioned in a gap between the key element and the elevated element to which the key element is fixedly connected.

13. A dynamic display keyboard according to any of the preceding claims as dependent on claim 4 or 5, wherein the display unit is placed above the elastic mat, such that a respective movable part of the display unit pertaining to a respective key element is configured to be positioned in a gap between the key element and the elevated element to which the key element is fixedly connected.

## Patentansprüche

1. Dynamische Anzeigetastatur (100), umfassend
■ eine Mehrzahl von Tastenelementen (101), wobei jedes Tastenelement einen Übertragungsteil (102) umfasst, der für die Übertragung zumindest eines Teils eines auf den Übertragungsteil einfallenden Lichts ausgelegt ist;
■ ein erhöhtes Element (106, 107, 109, 201, 202) für jedes Tastenelement, wobei jedes erhöhte Element für die Bereitstellung einer taktilen Rückmeldung ausgelegt ist;
■ zumindest ein Abstandselement (1201) für jedes Tastenelement für eine feste Verbindung jedes Tastenelements mit zumindest einem jeweiligen erhöhten Element;
■ eine Anzeigeeinheit (111, 911), welche einen Rahmenteil (905) umfasst und einen beweglichen Teil (901, 902, 903) für jedes Tastenelement umfasst, wobei jeder bewegliche Teil im Verhältnis zum Rahmenteil beweglich ist, wobei ein äußerer Teil (904) jedes beweglichen Teils zwischen einem jeweiligen Tastenelement und dem entsprechenden erhöhten Element angeordnet ist; welche Anzeigeeinheit so ausgelegt ist, dass Licht aus einem jeweiligen äußeren Teil, welches Licht sich durch einen jeweiligen Übertragungsteil ausbreitet, einen visuellen Wert des entsprechenden Tastenelements definiert, wobei die Anzeigeeinheit eine Anzeige mit einer dünnen flexiblen Schicht (911) umfasst, umfassend den Rahmenteil und jeden beweglichen Teil, und wobei die Dicke der Anzeigeeinheit weniger als 2 mm beträgt.

2. Dynamische Anzeigetastatur nach Anspruch 1, wobei die Dicke der Anzeigeeinheit mit einer dünnen Schicht im Bereich von 0,1 mm bis 0,2 mm liegt.

3. Dynamische Anzeigetastatur nach Anspruch 1 oder 2, umfassend einen in die Anzeigeeinheit mit einer dünnen Schicht eingebundenen Datenbus, wobei der Datenbus den äußeren Teil von jedem der beweglichen Teile anspricht.

4. Dynamische Anzeigetastatur nach einem der vorhergehenden Ansprüche, umfassend eine elastische die erhöhten Elemente enthaltende Matte (105), wobei die jeweiligen erhöhten Elemente jeweils für die Steuerung der Bewegungsrichtung des jeweiligen Tastenelements ausgelegt sind.

5. Dynamische Anzeigetastatur nach einem der Ansprüche 1-3, umfassend eine elastische die erhöhten Elemente enthaltende Matte (105), wobei jedes der erhöhten Elemente mit einem jeweiligen Scherenelement (106) fest verbunden ist, und wobei jedes der Scherenelemente für die Steuerung der Bewegungsrichtung des jeweiligen Tastenelements ausgelegt ist.

6. Dynamische Anzeigetastatur nach einem der vorhergehenden Ansprüche, wobei ein Teil des erhöhten Elements, mit dem das Tastenelement fest verbunden ist, solide und elektrisch leitend ist.

7. Dynamische Anzeigetastatur nach einem der vorhergehenden Ansprüche, umfassend eine Schicht (401), umfassend einen Kragen (402) für jedes Tastenelement, wobei jedes Tastenelement mit einem jeweiligen Kragen fest verbunden ist.

8. Dynamische Anzeigetastatur nach Anspruch 7 in Abhängigkeit von Anspruch 4 oder 5, wobei die dynamische Anzeigetastatur zusätzlich zumindest ein unterstützendes Element (403) umfasst, das zwischen der Schicht, umfassend einen Kragen für jedes Tastenelement, und der Matte angeordnet ist, und die Schicht unterstützt, umfassend einen Kragen für jedes Tastenelement.

9. Dynamische Anzeigetastatur nach einem der vorhergehenden Ansprüche, wobei die Höhe von der Spitze des Rahmens der Anzeigeeinheit zur Spitze eines jeweiligen äußeren Teils des beweglichen Teils im Bereich von 2,0 mm bis 3,0 mm gewählt ist.

10. Dynamische Anzeigetastatur nach einem der vorhergehenden Ansprüche, wobei der Übertragungsteil transparent ist.

11. Dynamische Anzeigetastatur nach einem der vorhergehenden Ansprüche, umfassend eine Leiterplatte (115), die für die Detektion eines niedergedrückten Tastenelements ausgelegt ist.

12. Dynamische Anzeigetastatur nach einem der vorhergehenden Ansprüche in Abhängigkeit von Anspruch 4 oder 5, wobei die Anzeigeeinheit unter der elastischen Matte untergebracht ist, und wobei die elastische Matte eine Öffnung (113) für jedes Tastenelement umfasst, so dass ein jeweiliger beweglicher Teil der Anzeigeeinheit in Bezug auf ein jeweiliges Tastenelement dafür ausgelegt ist, durch die Öffnung geführt und in einem Loch zwischen dem Tastenelement und dem erhöhten Element, mit dem das Tastenelement fest verbunden ist, angeordnet zu werden.

13. Dynamische Anzeigetastatur nach einem der vorhergehenden Ansprüche in Abhängigkeit von Anspruch 4 oder 5, wobei die Anzeigeeinheit oberhalb der elastischen Matte angebracht ist, so dass ein jeweiliger beweglicher Teil der Anzeigeeinheit in Bezug auf ein jeweiliges Tastenelement dafür ausgelegt ist, in einem Loch zwischen dem Tastenelement und dem erhöhten Element, mit dem das Tastenelement fest verbunden ist, angeordnet zu werden.

## Revendications

1. Clavier à affichage dynamique (100) comprenant
■ une pluralité d'éléments de touche (101), chaque élément de touche comprenant une partie de transmission (102) configurée pour transmettre au moins une partie de la lumière incidente sur la partie de transmission;
■ un élément surélevé (106, 107, 109, 201, 202) pour chaque élément de touche, chaque élément surélevé étant configuré pour fournir une rétroaction tactile;
■ au moins une pièce d'écartement (1201) pour chaque élément de touche pour relier de manière fixe chaque élément de touche avec au moins un élément surélevé respectif;
■ une unité d'affichage (111, 911) comprenant une partie de cadre (905) et comprenant une partie mobile (901, 902, 903) pour chaque élément de touche, chaque partie mobile pouvant se déplacer par rapport à la partie de cadre, une partie extérieure (904) de chaque partie mobile étant située entre un élément de touche respectif et l'élément surélevé correspondant; l'unité d'affichage étant configurée si bien qu'une lumière provenant d'une partie extérieure respective, ladite lumière se propageant à travers une partie de transmission respective, définit une valeur visuelle de l'élément de touche correspondant, l'unité d'affichage comprenant un affichage à couche mince et souple (911) comprenant la partie de cadre et chaque partie mobile, et l'épaisseur de l'unité d'affichage étant inférieure à 2 mm.

2. Clavier à affichage dynamique selon la revendication 1, dans lequel l'épaisseur de l'unité d'affichage à couche mince est comprise entre 0,1 mm et 0,2 mm.

3. Clavier à affichage dynamique selon la revendication 1 ou 2, comprenant un bus de données intégré dans l'unité d'affichage à couche mince, le bus de données portant sur la partie extérieure de chacune des parties mobiles.

4. Clavier à affichage dynamique selon l'une quelconque des revendications précédentes, comprenant un tapis élastique (105) contenant les éléments surélevés, chacun des éléments surélevés respectifs étant configuré pour commander la direction du déplacement de l'élément de touche respectif.

5. Clavier à affichage dynamique selon l'une quelconque des revendications 1 à 3, comprenant un tapis élastique (105) contenant les éléments surélevés, chacun des éléments surélevés étant relié de manière fixe à un élément de ciseaux respectif (106), et chacun des éléments de ciseaux étant configuré pour commander la direction du déplacement de l'élément de touche respectif.

6. Clavier à affichage dynamique selon l'une quelconque des revendications précédentes, dans lequel une partie de l'élément surélevée à laquelle l'élément de touche est relié de manière fixe est solide et conductrice de l'électricité.

7. Clavier à affichage dynamique selon l'une quelconque des revendications précédentes, comprenant une couche (401) comprenant un collier (402) pour chaque élément de touche, chaque élément de touche étant relié de manière fixe au collier respectif.

8. Clavier à affichage dynamique selon la revendication 7 dépendant de la revendication 4 ou 5, dans lequel le clavier à affichage dynamique en outre comprend au moins un élément de support (403) positionné entre la couche comprenant un collier pour chaque élément de touche et le tapis et supportant la couche comprenant un collier pour chaque élément de touche.

9. Clavier à affichage dynamique selon l'une quelconque des revendications précédentes, dans lequel la hauteur à partir de la partie supérieure du cadre de l'unité d'affichage à la partie supérieure d'une partie extérieure respective de la partie mobile est choisie dans la gamme comprise entre 2,0 mm et 3,0 mm.

10. Clavier à affichage dynamique selon l'une quelconque des revendications précédentes, dans lequel la partie de transmission est transparente.

11. Clavier à affichage dynamique selon l'une quelconque des revendications précédentes, comprenant une carte de circuit imprimé (115) configurée pour détecter un élément de touche enfoncé.

12. Clavier à affichage dynamique selon l'une quelconque des revendications précédentes dépendant de la revendication 4 ou 5, dans lequel l'unité d'affichage est placée au-dessous du matelas élastique, et dans lequel le matelas élastique comprend une ouverture (113) pour chaque élément de touche, si bien qu'une partie mobile respective de l'unité d'affichage se rapportant à un élément de touche respectif est configurée pour être guidée à travers l'ouverture et positionnée dans un écart entre l'élément de touche et l'élément surélevé auquel l'élément de touche est relié de manière fixe.

13. Clavier à affichage dynamique selon l'une quelconque des revendications précédentes dépendant de la revendication 4 ou 5, dans lequel l'unité d'affichage est placée au-dessus du matelas élastique si bien qu'une partie mobile respective de l'unité d'affichage se rapportant à un élément de touche respectif est configurée pour être positionnée dans un écart entre l'élément de touche et l'élément surélevé auquel l'élément de touche est relié de manière fixe.
